# EUROPÄISCHE PATENTSCHRIFT

(11) **EP 1 789 231 B1**
(45) Veröffentlichungstag und Bekanntmachung des Hinweises auf die Patenterteilung: **28.02.2018**
(21) Anmeldenummer: 05756862.8
(22) Anmeldetag: 01.07.2005
(51) Int. Cl.: B23Q 3/12, B25D 17/08, B23D 31/00, B25D 17/00, B23B 31/00, B23B 51/12

(54) **ADAPTER UND SYSTEM MIT EINER WERKZEUGAUFNAHME UND EINEM ADAPTER**
TOOL ADAPTER AND SYSTEM WITH A TOOL HOLDER AND ADAPTER
ADAPTATEUR ET SYSTEME COMPOSE D'UN LOGEMENT A OUTIL ET D'UN ADAPTATEUR

(30) Priorität: 03.09.2004 DE 102004042735
(43) Veröffentlichungstag der Anmeldung: 30.05.2007
(73) Patentinhaber: ROBERT BOSCH GMBH, 70442 Stuttgart (DE)
(72) Erfinder: ULLRICH, Andre, 70794 Filderstadt-Bernhausen (DE); BERNHARDT, Thomas, 72631 Aichtal-Groetzingen (DE); SIEBER, Kurt, 70771 Leinfelden-Echterdingen (DE)
(86) Internationale Anmeldenummer: PCT/EP2005/053133
(87) Internationale Veröffentlichungsnummer: WO 2006/024568

(56) Entgegenhaltungen:
- DE-A1- 19 621 610
- US-A- 4 491 444

## Beschreibung

### Stand der Technik

Die Erfindung geht insbesondere aus von einem System mit einer Werkzeugaufnahme. Eine derartige Werkzeugaufnahme ist beispielsweise aus der DE 196 21 610 A1 benannt. Es sind Werkzeugaufnahmen bekannt, die zur Aufnahme eines Bohrhammer- und/oder eines Meißelwerkzeugs und eines Adapters vorgesehen sind. Dabei weist der Adapter zu einem ersten Ende einen dem Bohrhammer- und/oder Meißelwerkzeug entsprechenden Befestigungsbereich zur Einführung in die Werkzeugaufnahme und zu einem zweiten Ende einen von einem Außengewinde gebildeten Aufnahmebereich für ein Spannfutter auf.

### Vorteile der Erfindung

Die Erfindung geht aus von einem System mit einer Werkzeugaufnahme, die zur Aufnahme eines Bohrhammer- und/oder Meißelwerkzeugs und eines Adapters vorgesehen ist, wobei die Werkzeugaufnahme ein Mittel zumindest zur Reduzierung der Beweglichkeit des Adapters im montierten Zustand gegenüber der Beweglichkeit des Bohrhammer- und/oder Meißelwerkzeugs im montierten Zustand aufweist. Durch dieses speziell für den Adapter vorgesehene Mittel kann ein besonders komfortables und exaktes Arbeiten mit dem Adapter erzielt werden. Dabei ist zu bemerken, dass die Auslegung der Werkzeugaufnahme im Wesentlichen eine vorteilhafte Beweglichkeit des Bohrhammer- und/oder Meißelwerkzeugs vorgibt.

Die DE 196 21 610 A1 offenbart eine Einrichtung zum Wechseln einer Werkzeugaufnahme, die zur Aufnahme eines Bohrhammer- und/oder Meißelwerkzeugs und eines Adapters vorgesehen ist, mit wenigstens einem Mittel zumindest zur Reduzierung der Beweglichkeit des Adapters im montierten Zustand gegenüber der Beweglichkeit des Bohrhammer- und/oder Meißelwerkzeugs im montierten Zustand.

Die US 4 491 444 A offenbart eine Werkzeugaufnahme für Bohrhammer- und/oder Meißelwerkzeuge, wobei das Aufnahmeelement der Werkzeugaufnahme dazu vorgesehen ist, den Werkzeugschaft des Bohrhammer - und/oder Meißelwerkzeugs aufzunehmen.

Das Mittel ist von einem Zentriermittel gebildet, das zur Zentrierung des Adapters vorgesehen ist und das zumindest eine von einer Lagerfläche zur Lagerung des Bohrhammer- und/oder Meißelwerkzeugs abweichende Zentrierfläche aufweist, kann ein besonders vorteilhafter, zumindest weitgehend von einem Verschleiß während eines Bohrhammer- bzw. Meißelbetriebs unabhängiger Rundlauf des Adapters erzielt werden.

Das von einem Zentriermittel gebildete Mittel kann verschiedene, dem Fachmann als sinnvoll erscheinende Zentrierflächen aufweisen, wie beispielsweise zylindrische und/oder gestufte Zentrierflächen usw. Weist das Mittel jedoch zumindest eine als Schrägfläche und insbesondere als Konusfläche ausgebildete Zentrierfläche auf, kann eine besonders einfache Montage des Adapters und eine schmutzunempfindliche Zentrierung desselben mit sehr geringem Spiel und insbesondere auch ohne Spiel bzw. mit sehr geringer Exzentrizität und insbesondere auch ohne Exzentrizität realisiert werden. Ferner kann ein unerwünschter Verkippwinkel des Adapters innerhalb der Werkzeugaufnahme zumindest reduziert werden.

In einer weiteren Ausgestaltung der Erfindung wird vorgeschlagen, dass die als Schrägfläche ausgebildete Zentrierfläche an einer Stirnseite eines Bauteils angeordnet ist. Die Zentrierfläche ist dadurch mit geringem Aufwand herstellbar. Die Schrägfläche kann dabei radial nach außen oder vorteilhaft radial nach innen weisen.

Ferner ist das Mittel von einem Verriegelungsmittel gebildet, das dazu vorgesehen ist, eine eine Axialbeweglichkeit des Adapters zumindest kleiner als eine Leerlaufstrecke auszuführen. Unter einer "Leerlaufstrecke" soll in diesem Zusammenhang eine durch die Auslegung der Werkzeugaufnahme zumindest im Wesentlichen bestimmte Strecke des Bohrhammer- und/oder Meißelwerkzeugs verstanden werden, welche überbrückt werden muss, um dasselbe von seiner Leerlaufstellung ohne Schlagantrieb und ohne Werkstückkontakt in axialer Richtung in die Werkzeugaufnahme zu einer Betriebsstellung zu verschieben, in der das Bohrhammer- und/oder Meißelwerkzeug schlagend antreibbar ist. Durch die im Hinblick zur Leerlaufstrecke zumindest reduzierte Axialbeweglichkeit des Adapters kann ein besonders komfortables und exaktes Arbeiten mit dem Adapter erzielt und insbesondere kann ein vorteilhaftes Anbohren ermöglicht werden.

Das Mittel kann dabei von einem separaten, speziell nur zur Reduzierung der Beweglichkeit vorgesehenen Bauteil ausgebildet sein oder kann vorteilhaft zumindest teilweise einstückig mit einem Bauteil mit wenigstens einer weiteren Funktion ausgebildet sein, wodurch zusätzliche Bauteile, Bauraum, Gewicht, Montageaufwand und Kosten eingespart werden können.

Dabei ist das Mittel und insbesondere das von einem Zentriermittel gebildete Mittel zumindest teilweise einstückig mit einem Werkzeugaufnahmegrundkörper ausgebildet, wodurch dieses mit geringem konstruktiven Aufwand vorteilhaft positioniert und bzgl. seiner Materialfestigkeit vorteilhaft ausgelegt werden kann. Unter einem "Werkzeugaufnahmegrundkörper" soll in diesem Zusammenhang insbesondere ein Körper verstanden werden, der unmittelbar Lagerflächen für das Bohrhammer- und/oder Meißelwerkzeug bildet und zumindest in erster Linie zur Aufnahme der Lagerkräfte des Bohrhammer- und/oder Meißelwerkzeugs dient. Ist der Werkzeugaufnahmegrundkörper zudem von einem Hammerrohr gebildet, in das ein Schlagwerk zumindest teilweise integriert ist, beispielsweise indem in diesem ein Schlagbolzen bzw. ein Döpper und/oder ein Kolben eines Schlagwerks geführt ist, können weiter zusätzliche Bauteile eingespart werden. Der Werkzeugaufnahmegrundkörper kann jedoch auch von einem an einem Hammerrohr befestigten Bauteil gebildet sein. Zusätzlich zu dem Werkzeugaufnahmegrundkörper ist eine Abschlusskappe vorgesehen. Insbesondere bietet sich die Abschlusskappe vorteilhaft an, mit dem von einem Verriegelungsmittel gebildeten Mittel, das dazu vorgesehen ist, eine Axialbeweglichkeit des Adapters zumindest kleiner als eine Leerlaufstrecke auszuführen, zumindest teilweise einstückig ausgeführt zu werden. Die Abschlusskappe ist häufig aus einem elastischen Kunststoff hergestellt, so dass dessen Elastizität vorteilhaft zur Erzielung einer Spannkraft in axialer Richtung genutzt werden kann. Mit einer Spannkraft in axialer Richtung kann eine besonders vorteilhafte, insbesondere spielfreie Fixierung erreicht und mit einer Zentrierfläche, insbesondere mit einer konischen Zentrierfläche, kann eine besonders geringe Exzentrizität erzielt werden. Die Spannkraft kann dabei alternativ zu der Nutzung einer Abschlusskappe auch durch andere, dem Fachmann als sinnvoll erscheinende Mittel erreicht werden, wie beispielsweise durch speziell vorgesehene Federelemente, Hebelmechanismen, Magnete usw.

Ferner weist der Adapter wenigstens ein Mittel auf, das dazu vorgesehen ist, die Beweglichkeit des Adapters gegenüber einem der Werkzeugaufnahme zugeordneten Bohrhammer- und/oder Meißelwerkzeug zu reduzieren. Durch dieses spezielle Mittel kann ebenfalls ein besonders komfortables und exaktes Arbeiten mit dem Adapter erzielt werden.

Das Mittel wird von einem Zentriermittel gebildet, das zur Zentrierung des Adapters relativ zur Werkzeugaufnahme vorgesehen ist und das zumindest eine Zentrierfläche aufweist, die zur Korrespondenz mit einer von einer Lagerfläche für ein Bohrhammer- und/oder Meißelwerkzeug abweichenden Zentrierfläche vorgesehen ist, wodurch mittels des Adapters ein kleines Radialspiel, eine kleine Exzentrizität und insbesondere ein kleiner Verkippwinkel des Adapters innerhalb der Werkzeugaufnahme vorteilhaft erreicht werden können.

Wie bei der Werkzeugaufnahme kann das von einem Zentriermittel gebildete Mittel dabei verschiedene, dem Fachmann als sinnvoll erscheinende Zentrierflächen aufweisen, wie beispielsweise zylindrische und/oder gestufte Zentrierflächen usw. Weist das Mittel jedoch zumindest eine als Schrägfläche und insbesondere als Konusfläche ausgebildete Zentrierfläche auf, können eine besonders einfache Montage des Adapters und eine schmutzunempfindliche Zentrierung desselben mit sehr geringem Spiel und insbesondere auch ohne Spiel bzw. mit sehr geringer Exzentrizität und insbesondere auch ohne Exzentrizität realisiert werden.

Das Mittel des Adapters ist von einem Befestigungsmittel gebildet, das dazu vorgesehen ist, die Axialbeweglichkeit gegenüber dem Bohrhammer- und/oder Meißelwerkzeug zu reduzieren. Mit dem speziellen Mittel des Adapters kann insbesondere ein komfortables Anbohren mit dem Adapter erzielt werden.

Die Mittel der Werkzeugaufnahme und des Adapters, die ein System bilden, sind vorzugsweise in der Weise aufeinander abgestimmt, dass die Exzentrizität kleiner als 1 mm und die Axialbeweglichkeit kleiner als 5 mm und vorteilhaft kleiner als 3 mm und besonders vorteilhaft kleiner als 1 mm ist.

Ferner weist der Adapter im montierten Zustand relativ zur Werkzeugaufnahme vorteilhaft ein kleineres Radialspiel auf als ein zugeordnetes Bohrhammer- und/oder Meißelwerkzeug, und zwar vorzugsweise ein Radialspiel kleiner als 0,06 mm und besonders vorzugsweise kleiner als 0,04 mm.

Erstreckt sich der Adapter im montierten Zustand über einen gesamten Aufnahmebereich der Werkzeugaufnahme, kann ferner die Exzentrizität bzw. ein Verkippwinkel des Adapters innerhalb der Werkzeugaufnahme reduziert werden. Unter einem "Aufnahmebereich" soll in diesem Zusammenhang insbesondere ein zylindrischer Bereich verstanden werden, dessen Innendurchmesser an einen Außendurchmesser eines zugeordneten Bohrhammer- und/oder Meißelwerkzeugs angepasst ist.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Bohr- und Meißelhammer in einer Seitenansicht mit einem Bohrhammerwerkzeug,
- Fig. 2: einen Längsschnitt durch eine Werkzeugaufnahme des Bohr- und Meißelhammers aus Figur 1 mit einem Adapter und
- Fig. 3: den Adapter aus Figur 2 in einer Einzeldarstellung.

### Beschreibung des Ausführungsbeispiels

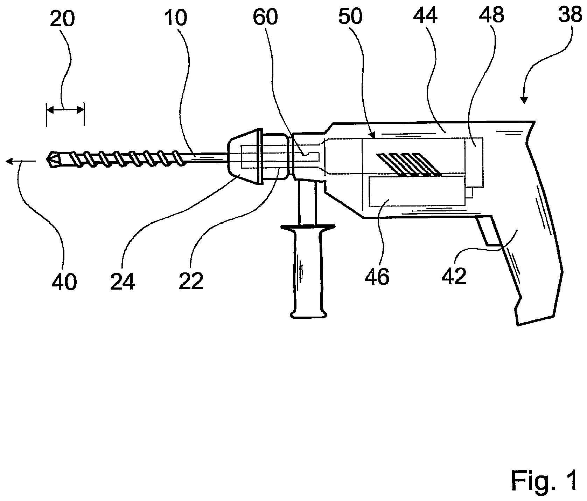

Figur 1 zeigt einen handgeführten Bohr- und Meißelhammer 38 in einer Seitenansicht. Der Bohr- und Meißelhammer 38 weist an einem ersten Ende einen sich im Wesentlichen senkrecht zu einer Bearbeitungsrichtung 40 erstreckenden Handgriff 42 und an einem zweiten Ende eine Werkzeugaufnahme auf, in der ein Bohrhammerwerkzeug 10 lösbar befestigt ist. Das Bohrhammerwerkzeug 10 ist mittels eines in einem Gehäuse 44 angeordneten, schematisch angedeuteten Elektromotors 46 drehend und über ein vom Elektromotor 46 antreibbares Schlagwerk 48 schlagend antreibbar. Das Schlagwerk 48 weist einen in einem Hammerrohr 50 geführten Kolben auf, der einen ebenfalls im Hammerrohr 50 geführten Schläger antreibt.

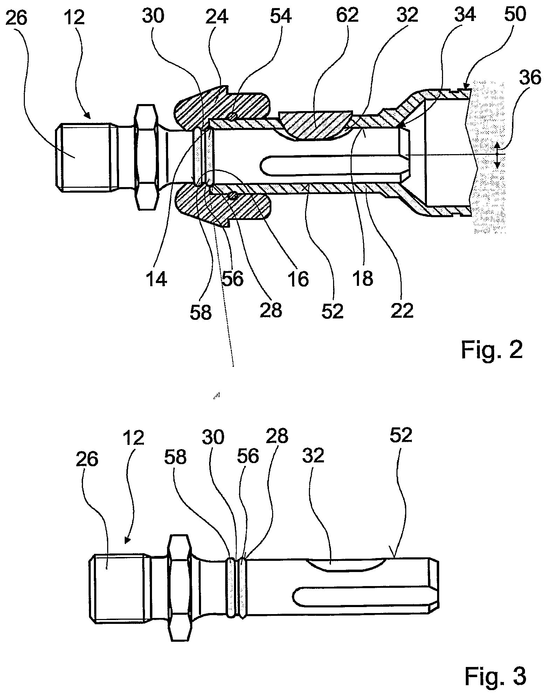

Die Werkzeugaufnahme ist zur Aufnahme verschiedener Bohrhammerwerkzeuge 10 und zur Aufnahme eines Adapters 12 vorgesehen (Figuren 2 und 3). Der Adapter 12 weist einen von einem Außengewinde gebildeten Aufnahmebereich 26 für ein nicht näher dargestelltes Spannfutter auf, in das ein Bohrwerkzeug eingespannt werden kann.

Das zylindrische Hammerrohr 50 weist an seinem dem Handgriff abgewandten Ende einen verjüngten Bereich auf, der einen Werkzeugaufnahmegrundkörper 22 mit einem Aufnahmebereich 34 der Werkzeugaufnahme bildet. Die Werkzeugaufnahme weist ein von einem Zentriermittel gebildetes Mittel 14 auf, das zur Zentrierung des Adapters 12 vorgesehen ist und das eine von einer Lagerfläche 18 zur Lagerung des Bohrhammerwerkzeugs 10 abweichende, als Schrägfläche ausgebildete Zentrierfläche aufweist. Die Schrägfläche wird von einer Konusfläche gebildet, ist an einer Stirnseite des Werkzeugaufnahmegrundkörpers 22 angeordnet und weist in radialer Richtung nach innen. Die Zentrierfläche des Mittels 14 korrespondiert im montierten Zustand mit einer als Schrägfläche ausgebildeten konischen Zentrierfläche eines Mittels 28 des Adapters 12. Das Mittel 28 ist einstückig an den Adapter 12 angeformt und wird von einem sich in radialer Richtung über einen zylindrischen Teilbereich des Adapters 12, der eine mit der Lagerfläche 18 korrespondierende Lagerfläche 52 bildet, erstreckenden Fortsatz 56 gebildet, der sich über den gesamten Umfang des Adapters 12 erstreckt.

Die Zentrierfläche des Mittels 28 des Adapters 12 und die Zentrierfläche des Mittels 14 der Werkzeugaufnahme werden beim Bohren mit dem Adapter 12 aufeinander gepresst, wodurch eine weitere Zentrierung stattfindet.

Neben dem Mittel 14 zur Zentrierung des Adapters 12 weist die Werkzeugaufnahme ein von einem Verriegelungsmittel gebildetes Mittel 16 auf, das dazu vorgesehen ist, eine Axialbeweglichkeit des Adapters 12 kleiner als eine Leerlaufstrecke 20 des Bohrhammerwerkzeugs 10 auszuführen (Figuren 1 und 2). Die Leerlaufstrecke 20, die ca. 6 mm beträgt, ist die Strecke, die das Bohrhammerwerkzeug 10 von einer Leerlaufstellung ohne schlagenden Antrieb im unbelasteten Zustand bis zu einer Betriebsstellung in die Werkzeugaufnahme eingeschoben werden muss, in der das Bohrhammerwerkzeug 10 schlagend antreibbar ist.

Das Mittel 16 ist einstückig mit einer aus Kunststoff hergestellten Abschlusskappe 24 ausgebildet und wird von einer ringnutförmigen, sich über einen gesamten Innenumfang der Abschlusskappe 24 erstreckenden Ausnehmung gebildet. Die Abschlusskappe 24 ist über einen Spannring 54 auf dem Hammerrohr 50 befestigt, ist über einen Reibschluss mit dem Hammerrohr 50 verbunden und dreht sich im Betrieb grundsätzlich gemeinsam mit dem Hammerrohr 50. Der Reibschluss zwischen der Abschlusskappe 24 und dem Hammerrohr 50 ist jedoch in der Weise ausgelegt, dass dieser überwunden werden kann, sollte die Abschlusskappe 24 während des Betriebs mit einem Gegenstand in Kontakt kommen.

Im montierten Zustand korrespondiert das Mittel 16 der Werkzeugaufnahme mit einem von einem Befestigungsmittel gebildeten Mittel 58 des Adapters 12, das ebenfalls dazu vorgesehen ist, die Axialbeweglichkeit gegenüber dem Bohrhammerwerkzeug 10 zu reduzieren. Das sich radial nach außen erstreckende, von einem wulstförmigen Fortsatz gebildete Mittel 58 greift dabei in das Mittel 16 ein. Die Mittel 14, 16, 28, 58 sind in der Weise aufeinander abgestimmt, dass der Adapter 12 ein Axialspiel in der Werkzeugaufnahme kleiner als 1 mm aufweist. Grundsätzlich wäre jedoch auch denkbar, dass die Mittel 14, 16, 28, 58 in der Weise aufeinander abgestimmt sind, dass der Adapter 12 im montierten Zustand mit der Zentrierfläche des Mittels 28 mit einer Spannkraft gegen die Zentrierfläche des Mittels 14 der Werkzeugaufnahme gedrückt wird. Zwischen dem Fortsatz 56 und dem Mittel 58 ergibt sich eine ringnutförmige Vertiefung 30.

Ferner weist der Adapter 12 ein weiteres, von einem Befestigungsmittel gebildetes Mittel 32 auf, das dazu vorgesehen ist, die Axialbeweglichkeit des Adapters 12 gegenüber dem Bohrhammerwerkzeug 10 zu reduzieren. Das Mittel 32 wird von einer Verriegelungstasche gebildet, die im Vergleich zu einer Verriegelungstasche 60 des Bohrhammerwerkzeugs 10 verkürzt ausgeführt ist, so dass die Axialbeweglichkeit des Adapters 12 innerhalb der Werkzeugaufnahme - bedingt durch die Verriegelungstasche - kleiner ist als die Leerlaufstrecke 20. Die das Mittel 32 bildende Verriegelungstasche ist im vorliegenden Ausführungsbeispiel in der Weise ausgeführt, dass ein durch eine Ausnehmung des Werkzeugaufnahmegrundkörpers 22 greifender Verriegelungskörper 62 in seiner Verriegelungsstellung in die Verriegelungstasche mit ca. 1 mm Luft in axialer Richtung eingreifen kann, so dass der Adapter 12 allein bedingt durch die Verriegelungstasche und den Verriegelungskörper 62 eine Axialbeweglichkeit von maximal 1 mm aufweist. Die speziell ausgebildete Verriegelungstasche des Adapters 12 bildet damit im vorliegenden Ausführungsbeispiel eine zu den Mitteln 16 und 58 redundante Funktion. Durch die spezielle Ausbildung der Verriegelungstasche des Adapters 12 kann eine vorteilhaft reduzierte Axialbeweglichkeit des Adapters 12 auch bei alternativen Werkzeugaufnahmen ohne ein Mittel 58 erreicht werden. Die Axialbeweglichkeit eines Adapters in einer Werkzeugaufnahme kann dabei grundsätzlich auch bedingt durch die Abstimmung der Verriegelungstasche auf den Verriegelungskörper 62 größer als 1 mm und vorteilhaft auch kleiner als 1 mm ausgeführt sein.

Der Adapter 12, der sich über den gesamten Aufnahmebereich 34 der Werkzeugaufnahme erstreckt, weist im montierten Zustand relativ zur Werkzeugaufnahme bzw. innerhalb der Werkzeugaufnahme ein kleineres Radialspiel 36 auf als das zugeordnete Bohrhammerwerkzeug 10, und zwar ein Radialspiel 36 kleiner/gleich 0,036 mm.

Der Adapter 12 ist von seiner Länge in der Weise ausgelegt, dass dieser mittels des Schlagwerks 48 über einen Schläger und über einen Döpper bzw. einen Schlagbolzen schlagend antreibbar ist. Grundsätzlich wäre jedoch auch denkbar, dass der Adapter 12 in Richtung Schlagwerk verkürzt ausgeführt wird, so dass ein schlagender Antrieb des Adapters 12 sicher vermieden ist.

**Bezugszeichen**

| | | | |
|---|---|---|---|
| 10 | Bohrhammer- und/oder Meißelwerkzeug | 56 | Fortsatz |
| | | 58 | Befestigungsmittel |
| 12 | Adapter | 60 | Verriegelungstasche |
| 14 | Zentriermittel | 62 | Verriegelungskörper |
| 16 | Befestigungsmittel | | |
| 18 | Lagerfläche | | |
| 20 | Leerlaufstrecke | | |
| 22 | Bauteil (Werkzeugaufnahmegrundkörper) | 24 | Bauteil |
| 26 | Aufnahmebereich | | |
| 28 | Zentriermittel | | |
| 30 | Vertiefung | | |
| 32 | Mittel | | |
| 34 | Aufnahmebereich | | |
| 36 | Radialspiel | | |
| 38 | Bohr- und Meißelhammer | | |
| 40 | Bearbeitungsrichtung | | |
| 42 | Handgriff | | |
| 44 | Gehäuse | | |
| 46 | Elektromotor | | |
| 48 | Schlagwerk | | |
| 50 | Hammerrohr | | |
| 52 | Lagerfläche | | |
| 54 | Spannring | | |

## Patentansprüche

1. System mit einer Werkzeugaufnahme und mit einem Adapter (12), wobei die Werkzeugaufnahme zur Aufnahme eines Bohrhammer- und/oder Meißelwerkzeugs (10) und des Adapters (12) vorgesehen ist, wobei der Adapter (12) dazu vorgesehen ist, in die Werkzeugaufnahme eingesetzt zu werden, wobei die Werkzeugaufnahme wenigstens ein Mittel (14, 16) zumindest zur Reduzierung der Beweglichkeit des Adapters (12) im montierten Zustand gegenüber der Beweglichkeit des Bohrhammer- und/oder Meißelwerkzeugs (10) im montierten Zustand aufweist, wobei das Mittel (14) von einem Zentriermittel gebildet ist, das zur Zentrierung des Adapters (12) vorgesehen ist und das zumindest eine von einer Lagerfläche (18) zur Lagerung des Bohrhammer- und/oder Meißelwerkzeugs (10) abweichende Zentrierfläche aufweist, wobei die Werkzeugaufnahme ein weiteres Mittel (16) aufweist, das von einem Verriegelungsmittel gebildet ist, das dazu vorgesehen ist, eine Axialbeweglichkeit des Adapters (12) zumindest kleiner als eine Leerlaufstrecke (20) des Bohrhammer- und/oder Meißelwerkzeugs (10) auszuführen, wobei die Werkzeugaufnahme eine Abschlusskappe (24) umfasst, die teilweise einstückig mit dem von dem Verriegelungsmittel gebildeten Mittel (16) ausgeführt ist, wobei der Adapter (12) wenigstens ein Mittel (28, 32, 58) umfasst, das dazu vorgesehen ist, die Beweglichkeit gegenüber einem der Werkzeugaufnahme zugeordneten Bohrhammer- und/oder Meißelwerkzeug (10) zu reduzieren, wobei das Mittel (28) von einem Zentriermittel gebildet ist, das zur Zentrierung relativ zur Werkzeugaufnahme vorgesehen ist und das zumindest eine Zentrierfläche aufweist, die zur Korrespondenz mit der von der Lagerfläche (18) für das Bohrhammer- und/oder Meißelwerkzeug (10) abweichenden Zentrierfläche vorgesehen ist, und das Mittel (28) einstückig an dem Adapter (12) angeformt ist und von einem sich in radialer Richtung über einen zylindrischen Teilbereich, der eine mit der Lagerfläche (18) korrespondierende Lagerfläche (52) bildet, erstreckenden Fortsatz (56) gebildet ist, der sich über den gesamten Umfang des Adapters (12) erstreckt, und wobei der Adapter (12) ein von einem Befestigungsmittel gebildetes weiteres Mittel (58) aufweist, das dazu vorgesehen ist, die Axialbeweglichkeit gegenüber dem Bohrhammer- und/oder Meißelwerkzeug (10) zu reduzieren, wobei das von einem Befestigungsmittel gebildete Mittel (58) des Adapters (12) mit dem Mittel (16) der Werkzeugaufnahme korrespondiert.

2. System nach Anspruch 1, **dadurch gekennzeichnet, dass** das Zentriermittel (14) der Werkzeugaufnahme wenigstens eine als Schrägfläche ausgebildete Zentrierfläche aufweist.

3. System nach Anspruch 2, **dadurch gekennzeichnet, dass** die als Schrägfläche ausgebildete Zentrierfläche des Zentriermittels (14) der Werkzeugaufnahme an einer Stirnseite eines Werkzeugaufnahmegrundkörpers (22) der Werkzeugaufnahme angeordnet ist.

4. System nach einem der vorhergehenden Ansprüche, **dadurch gekennzeichnet, dass das** Zentriermittel (14) der Werkzeugaufnahme zumindest teilweise einstückig mit einem Werkzeugaufnahmegrundkörper (22) der Werkzeugaufnahme ausgebildet ist.

5. System nach einem der vorhergehenden Ansprüche, **dadurch gekennzeichnet, dass** der Adapter (12) im montierten Zustand relativ zur Werkzeugaufnahme ein kleineres Radialspiel (36) aufweist als ein zugeordnetes Bohrhammer- und/oder Meißelwerkzeug (10).

6. System nach Anspruch 5, **dadurch gekennzeichnet, dass** das Radialspiel (36) kleiner als 0,06 mm ist.

7. System nach Anspruch 5 oder 6, **dadurch gekennzeichnet, dass** der Adapter (12) sich im montierten Zustand über einen gesamten Aufnahmebereich (34) der Werkzeugaufnahme erstreckt.

8. Adapter (12) eines Systems nach einem der vorhergehenden Ansprüche.

9. Adapter (12) nach Anspruch 8, **dadurch gekennzeichnet, dass** das Zentriermittel (28) zumindest eine als Schrägfläche ausgebildete Zentrierfläche aufweist.

## Claims

1. System having a tool receptacle and having an adapter (12), wherein the tool receptacle is intended to receive a hammer-drill and/or chipping tool (10) and the adapter (12), wherein the adapter (12) is intended to be inserted into the tool receptacle, wherein the tool receptacle has at least one means (14, 16) at least for reducing the mobility of the adapter (12) in the mounted state compared with the mobility of the hammer-drill and/or chipping tool (10) in the mounted state, wherein the means (14) is formed by a centring means which is intended to centre the adapter (12) and which has at least one centring face that diverges from a bearing face (18) for mounting the hammer-drill and/or chipping tool (10), wherein the tool receptacle has a further means (16), which is formed by a locking means that is intended to configure axial mobility of the adapter (12) at least to be less than an idling distance (20) of the hammer-drill and/or chipping tool (10), wherein the tool receptacle comprises an end cap (24) which is embodied partially in one piece with the means (16) formed by the locking means (16), wherein the adapter (12) comprises at least one means (28, 32, 58) which is intended to reduce the mobility with respect to a hammer-drill and/or chipping tool (10) assigned to the tool receptacle, wherein the means (28) is formed by a centring means which is provided for centring relative to the tool receptacle and which has at least one centring face which is intended to correspond with the centring face that deviates from the bearing face (18) for the hammer-drill and/or chipping tool (10), and the means (28) is integrally formed on the adapter (12) and is formed by a protrusion (56) which extends in a radial direction over a cylindrical sub-region that forms a bearing face (52) corresponding with the bearing face (18), said protrusion (56) extending around the entire circumference of the adapter (12), and wherein the adapter (12) has a further means (58) formed by a fastening means, which is intended to reduce the axial mobility with respect to the hammer-drill and/or chipping tool (10), wherein the means (58), formed by a fastening means, of the adapter (12) corresponds with the means (16) of the tool receptacle.

2. System according to Claim 1, **characterized in that** the centring means (14) of the tool receptacle has at least one centring face configured as an oblique face.

3. System according to Claim 2, **characterized in that** the centring face, configured as an oblique face, of the centring means (14) of the tool receptacle is arranged on an end side of a main tool-receptacle body (22) of the tool receptacle.

4. System according to one of the preceding claims, **characterized in that** the centring means (14) of the tool receptacle is formed at least partially in one piece with a main tool-receptacle body (22) of the tool receptacle.

5. System according to one of the preceding claims, **characterized in that**, in the mounted state relative to the tool receptacle, the adapter (12) has a smaller radial clearance (36) than an associated hammer-drill and/or chipping tool (10).

6. System according to Claim 5, **characterized in that** the radial clearance (36) is less than 0.06 mm.

7. System according to Claim 5 or 6, **characterized in that**, in the mounted state, the adapter (12) extends over an entire receiving region (34) of the tool receptacle.

8. Adapter (12) of a system according to one of the preceding claims.

9. Adapter (12) according to Claim 8, **characterized in that** the centring means (28) has at least one centring face configured as an oblique face.

## Revendications

1. Système comprenant un logement d'outil et un adaptateur (12), le logement d'outil étant prévu pour recevoir un outil perforateur et/ou un outil de burinage (10) et l'adaptateur (12), l'adaptateur (12) étant prévu pour être inséré dans le logement d'outil, le logement d'outil présentant au moins un moyen (14, 16) au moins pour réduire la mobilité de l'adaptateur (12) dans l'état monté par rapport à la mobilité de l'outil perforateur et/ou de l'outil de burinage (10) dans l'état monté, le moyen (14) étant formé par un moyen de centrage qui est prévu pour centrer l'adaptateur (12) et qui présente au moins une surface de centrage s'écartant d'une surface de support (18) pour le support de l'outil perforateur et/ou de l'outil de burinage (10), le logement d'outil présentant un moyen supplémentaire (16) qui est formé par un moyen de verrouillage qui est prévu pour faire en sorte qu'une mobilité axiale de l'adaptateur (12) soit au moins inférieure à une course de marche à vide (20) de l'outil perforateur et/ou de l'outil de burinage (10), le logement d'outil présentant un capuchon de terminaison (24) qui est réalisé en partie d'une seule pièce avec le moyen (16) formé par le moyen de verrouillage, l'adaptateur (12) comprenant au moins un moyen (28, 32, 58) qui est prévu pour réduire la mobilité par rapport à un outil perforateur et/ou un outil de burinage (10) associé au logement d'outil, le moyen (28) étant formé par un moyen de centrage qui est prévu pour le centrage par rapport au logement d'outil et qui présente au moins une surface de centrage qui est prévue pour correspondre avec la surface de centrage s'écartant de la surface de support (18) pour l'outil perforateur et/ou l'outil de burinage (10), et le moyen (28) étant façonné d'une seule pièce sur l'adaptateur (12) et étant formé par une saillie (56) s'étendant dans la direction radiale sur une région partielle cylindrique qui forme une surface de support (52) correspondant à la surface de support (18), laquelle saillie s'étend sur toute la périphérie de l'adaptateur (12), et l'adaptateur (12) présentant un moyen supplémentaire (58) formé par un moyen de fixation, qui est prévu pour réduire la mobilité axiale par rapport à l'outil perforateur et/ou à l'outil de burinage (10), le moyen (58) de l'adaptateur (12), formé par un moyen de fixation, correspondant au moyen (16) du logement d'outil.

2. Système selon la revendication 1, **caractérisé en ce que** le moyen de centrage (14) du logement d'outil présente au moins une surface de centrage réalisée sous forme de surface oblique.

3. Système selon la revendication 2, **caractérisé en ce que** la surface de centrage du moyen de centrage (14) du logement d'outil, réalisée sous forme de surface oblique, est disposée au niveau d'un côté frontal d'un corps de base de logement d'outil (22) du logement d'outil.

4. Système selon l'une quelconque des revendications précédentes, **caractérisé en ce que** le moyen de centrage (14) du logement d'outil est réalisé au moins en partie d'une seule pièce avec un corps de base de logement d'outil (22) du logement d'outil.

5. Système selon l'une quelconque des revendications précédentes, **caractérisé en ce que** l'adaptateur (12), dans l'état monté, présente par rapport au logement d'outil un jeu radial (36) inférieur par rapport à celui d'un outil perforateur et/ou d'un outil de burinage (10) associé.

6. Système selon la revendication 5, **caractérisé en ce que** le jeu radial (36) est inférieur à 0,06 mm.

7. Système selon la revendication 5 ou 6, **caractérisé en ce que** l'adaptateur (12), dans l'état monté, s'étend sur une région de réception complète (34) du logement d'outil.

8. Adaptateur (12) pour un système selon l'une quelconque des revendications précédentes.

9. Adaptateur (12) selon la revendication 8, **caractérisé en ce que** le moyen de centrage (28) présente au moins une surface de centrage réalisée sous forme de surface oblique.
